Europäisches Patentamt

European Patent Office

Office européen des brevets

(19)

(11) Publication number: **0 172 538 B1**

## EUROPEAN PATENT SPECIFICATION

(12)

(45) Date of publication of patent specification: **11.03.92**    (51) Int. Cl.⁵: **B01D  46/12**

(21) Application number: **85110284.8**

(22) Date of filing: **16.08.85**

A request for correction has been filed pursuant
to Rule 88 EPC. A decision on this request will
be taken during the proceedings before the
Examining Division.

(54) **A down flow filter panel dust collector.**

(30) Priority: **20.08.84 US 642589**

(43) Date of publication of application:
**26.02.86 Bulletin  86/09**

(45) Publication of the grant of the patent:
**11.03.92 Bulletin  92/11**

(84) Designated Contracting States:
**DE FR GB IT SE**

(56) References cited:
**EP-A- 0 083 169**
**EP-A- 0 089 114**
**US-A- 3 726 066**
**US-A- 4 331 459**

(73) Proprietor: **SnyderGeneral Corporation**
**3620 Trammell Crow Center 2001 Ross Avenue**
**Dallas, Texas 75201-2997(US)**

(72) Inventor: **O'Dell, Leonard Jackson**
**3013 Vogue Avenue**
**Louisville Kentucky 40220(US)**

(74) Representative: **Morgan, James G. et al**
**MANITZ, FINSTERWALD & ROTERMUND**
**Robert-Koch-Strasse 1**
**W-8000 München 22(DE)**

EP 0 172 538 B1

# Description

This invention relates to a dust collector in accordance with the preamble of claim 1. A dust collector of this kind is known from EP-A-0 089 114 for removing particulates from a down flow dirty gas stream. Thus the present invention is concerned with vertically oriented filters mounted in relation to a hopper and is aimed at maximising the amount of particulates that pass directly to the hopper without depositing on the filter surfaces.

Dust collectors for separating particulates from a dirty gas stream lose their efficiency as the filters become laden with particulates collected from the gas. The presence of particulates on the filter increases the differential pressure across the filter and restricts the flow of gas into the clean gas chamber. The filters could be replaced with clean filters to restore the original operating condition of the dust collector but this is costly, inconvenient and requires downtime in order to service the dust collector. Cleaning devices having a filter shaking mechanism therein have been used in dust collectors to dislodge deposits of particulates from the filtering surfaces. Another type of cleaning device utilizes a pulse of clean air in a reverse direction through the filter to dislodge collected particulates as is shown in GB-A-2 095 127, corresponding to United States patent 4,468,240 (published : 28.08.1984). While all of the prior art methods for restoring the efficiency of the filters in the dust collector work reasonably well, they all increase the operational expense of the dust collector. None of the prior art methods are directed to the concept of minimizing the amount of particulates that are collected on the filter surfaces to thereby increase the time before filter replacement or cleaning is required.

United States patent 4,468,240 discloses a dust collector having individual tubular filter elements which are horizontally and vertically spaced from each other. The dirty gas stream flows generally downward but the spaced tubular filter elements cause gas flow turbulence in the filtering zone that disrupts the effect of inertia and gravitational forces on particulates. United States patent 4,272,262 also shows a dust collector having a reverse air blast cleaning system. The normal air flow while filtering is upward and the particulates are carried upwardly until they are filtered out on the filtering surface. Inertia and gravity forces are not used to provide a means of separating the particulate from the dirty air stream.

In the dust collector known from EP-A-0 089 114 the filters lying above one another in the two banks are vertically spaced apart. This vertical spacing gives rise to turbulence which hinders an effective gravitational separation of dust particulates.

It is an object of this invention to provide a down flow, inertia and gravity separation of particulates from the gas flow in a dust collector.

It is another object of this invention to provide down flow dirty gas filtering in a dust collector having flat continuous filter surfaces to minimize turbulence which would disrupt the effect of inertia and gravity forces on particulates.

The objects are accomplished in a dust collector of the initially named kind but which is specially characterised in that said filter surfaces of the banks are contiguous to one another in said filter zone from said plenum zone to said quite zone so that a continuous filter surface results to allow said dirty gas stream to flow substantially straight downwardly across said vertical filter surfaces with minimum turbulence to impart downwardly directed inertia forces to said particulates which combine with the gravitational forces on said particulates to maximize the amount of particulates that will pass directly through said filter zone and into said quiet zone without depositing on said filters.

The present invention thus provides for a dust collector in which the dirty gas flows downwardly across a flat continuous filtering surface toward a quiet zone such as a hopper to use inertia as well as gravity forces imparted to the particles by the downward flowing gas stream to aid in separation of the particulates from the dirty gas stream. Inertia and gravity forces carry some of the particulates past the filters and prevent such particulates from depositing on the filter surface. Thus, internal and gravity forces are used to cause the particulates to be carried directly to the quiet zone immediately below the filtering zone. A reverse air blast system is provided to dislodge those particulates that may have deposited on the filter surfaces back into the dirty gas stream.

The particulates flow parallel to the filtering surfaces and are eventually deposited in a quiet zone formed by a hopper immediately below the filtering surface. Cleaning is provided with periodic reverse blasts of clean gas through the filters to loosen those particulates that do deposit on the filtering surface and to carry them downstream with the dirty gases for depositing in the hopper immediately below the filters. The dust collector provides continuous operation with a continuous flow of dirty gases from the inlet plenum chamber through the filters in the dirty gas chamber and periodic pulsing to maintain clean operating conditions of the filtering surface.

Preferred embodiments of the invention are set forth in the subordinate claims.

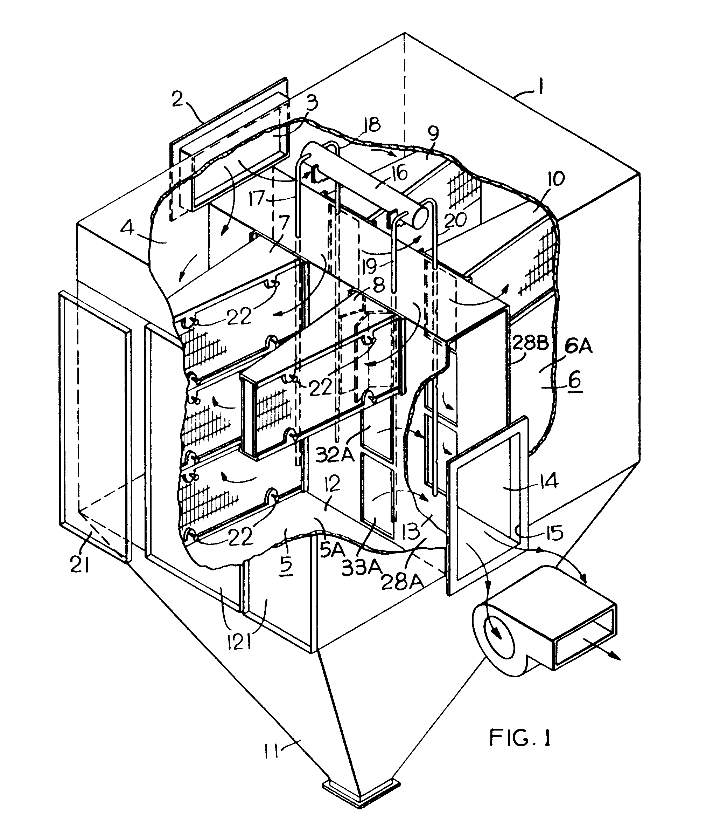

Referring to the drawings, Fig. 1 illustrates one embodiment of a dust collector in a three-dimensional view having symmetrical dirty gas chambers on opposing sides of the clean gas chamber;

Fig. 2 is a three-dimensional view of another embodiment of the dust collector with a single dirty gas chamber;

Fig. 3 is a front view of a modification of the dust collector shown in Fig. 2 with a vertically oriented gas reservoir for pulse cleaning the filters;

Fig. 4 is a side view of Fig. 3;

Fig. 5 is a back view of the dust collector shown in Figs. 3 and 4;

Fig. 6 is an enlarged cross-section view taken on line VI-VI of Fig. 4; and

Fig. 7 is an enlarged cross-section back view taken on line VII-VII of Fig. 4.

Referring to the drawings, the preferred embodiments of this invention are illustrated. Fig. 1 illustrates a three-dimensional view of a dust collector.

The dust collector comprises a housing 1 having a vertical partition in the form of horizontally spaced walls 28A, 28B which divide the housing into vertically extending dirty gas chambers 5 and 6 having a dirty gas inlet 2 defining an inlet passage 3 and a clean gas chamber 13 having a clean gas outlet 15 defining an outlet passage 14. The partition walls 28A, 28B have apertures 32A, 33A therein connecting the dirty gas chambers 5 and 6 in gas flow communication with the clean gas chamber 13.

The dirty gas chamber in turn is subdivided into three zones: an inlet plenum zone 4 having the dirty gas inlet 2 therein at a top portion of the housing; a quiet zone in the form of hopper 11 at a bottom portion of the housing; and a filtering zone 5A, 6A located between the inlet plenum zone and the quiet zone. A suitable means may be provided for removal of particulates from hopper 11.

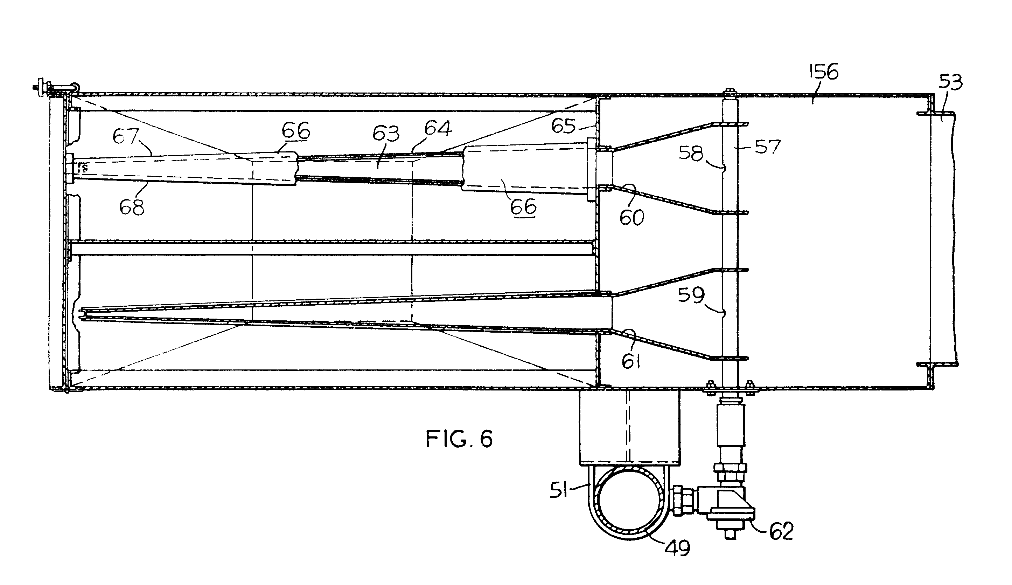

Filter assemblies 7 and 8 (Fig. 1), of the type more specifically shown and identified by reference number 66 in Fig. 6, are mounted in each filtering zone 5A, 6A. Each filter assembly includes a filter holder 64 which is mounted in sealed surrounding relation to each aperture 32A, 33A to extend cantilever fashion from the partition into the filtering zone. Filters 67, 68 are mounted in the filter holders 64. The filters 67, 68 have flat filter surfaces oriented vertically and parallel to the downward flow of the dirty gas stream through the filtering zone 5A, 6A. The filter assemblies 7 and 8 are arranged in vertical banks and the surfaces of the filters 67, 68 in each bank are contiguous to each other so that the dirty gas stream will flow downwardly across the filter surfaces with minimum turbulence so as not to disrupt the inertia and gravity forces imparted to the particulates. Each of the filter holders 64, when viewed in horizontal section, are tapered having a wide portion adjacent their sealed connection around the apertures 32A, 33A in the partition 28A and a narrow portion at the cantilevered end. The tapered configuration of the filter holders defines a space in said filter zone between the partition 28A and the housing 1 that progressively increases in volume as the distance from the partition 28A increases.

A clean gas reservoir 16 is mounted in the inlet plenum zone 4 above clean gas chamber 13 and contains compressed clean gas which is periodically pulsed in reverse flow through the conduits 17, 18, 19, and 20. A gas nozzle is provided on each of the conduits for directing gas pulses through each filter from the inner side thereof to clean the filters.

The filters can be easily removed by removal of the doors 21, 121 which fasten to the housing by suitable fastening means such as a latch or a spring snap. Once the doors 21, 121 are removed, the filters can be removed by removing the latches 22 on the filter assemblies 7 and 8.

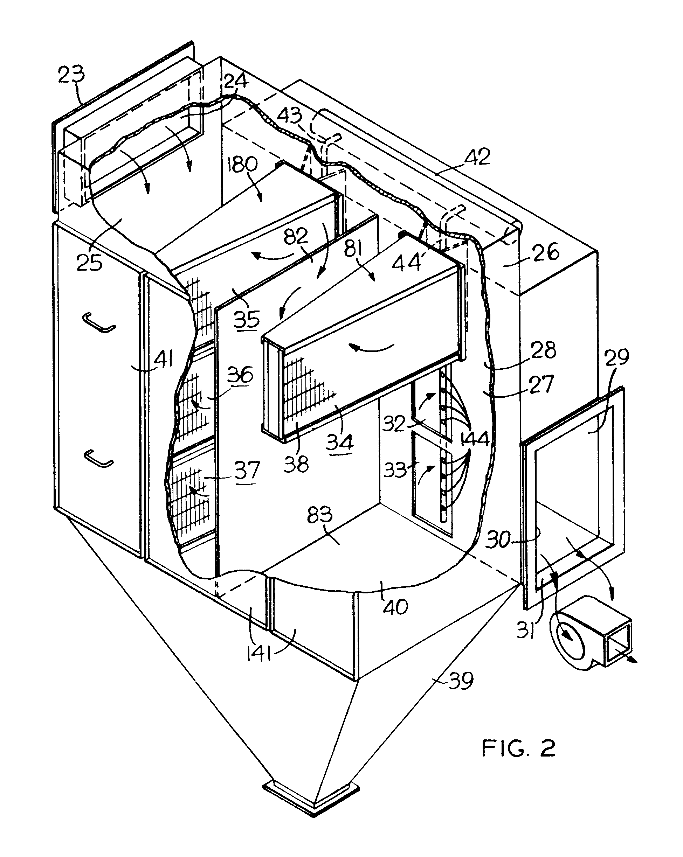

Referring to Fig. 2, a similar dust collector is shown having a housing and a partition 28 therein dividing the housing into a clean gas chamber 29 and a single dirty gas chamber 27. The dirty gas chamber is subdivided into an inlet plenum zone 25, a filtering zone 40 and a quiet zone 83. The inlet plenum zone has an inlet 23 in housing 26 forming an inlet passage 24 for the dirty gases to flow into the inlet plenum zone 25. The filtering zone 40 is located immediately below the inlet plenum zone 25 and the quiet zone 83 is located directly below the filtering zone. The partition 28 separating the dirty gas chamber 27 from the clean gas chamber 29 has an outlet passage 30 formed by the outlet 31. A plurality of apertures are formed in partition 28 but only apertures 32 and 33 are shown in Fig. 2. In a complete dust collector, all apertures in the partition are covered by filter assemblies such as filter assemblies 34, 35, 36 and 37. Each filter assembly includes a tapered filter holder in which filters 38 are mounted. The quiet zone below the filter zone 25 is created by hopper 39 operating as a dirt trap for particulates carried in the dirty gas stream downwardly beyond the filters 38.

The housing 26 has removable access doors 41, 141 mounted thereon with suitable fastening means. The access doors 41, 141 can be removed to permit servicing the filter assemblies within the dirty gas chamber 27.

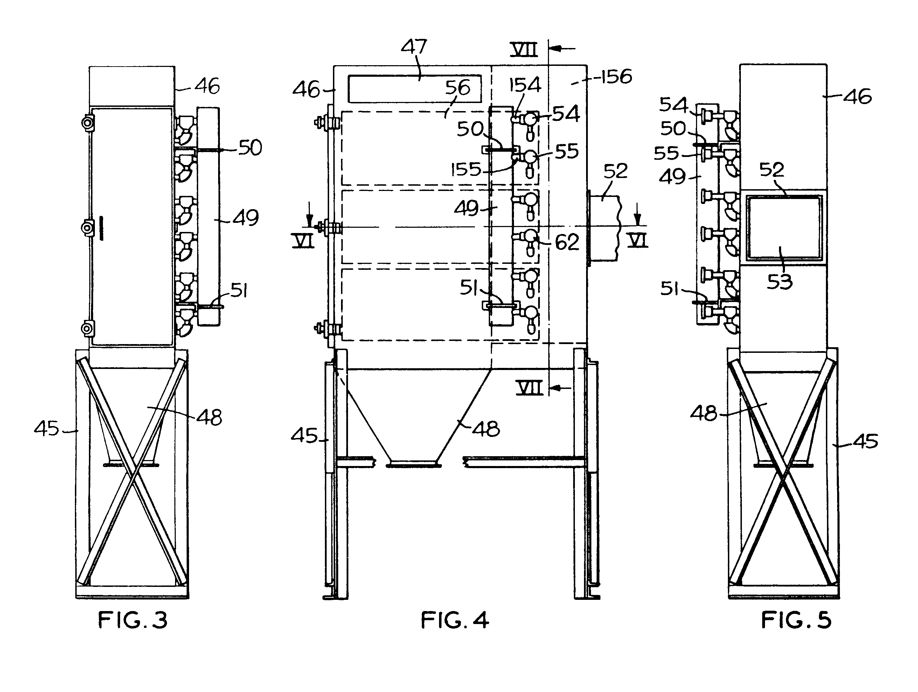

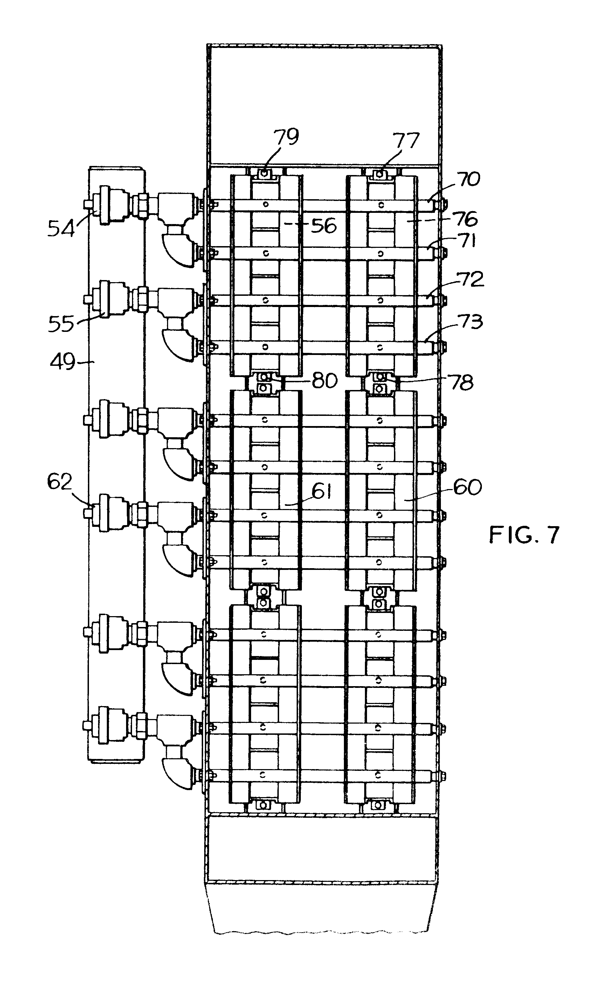

A compressed air reservoir 42 is mounted externally of a portion of the housing that forms part of the clean gas chamber 29. The compressed air reservoir 42 is in communication through conduits 43, 44 and suitable sequencing valve arrangements, as shown in Figs. 4 and 7, for pulsing clean gas to the inside of each of the filter assemblies.

Gas orifices 144 are provided on the conduits 43 and 44 for directing the clean gas to the interior of the filters.

Figs. 3, 4 and 5 illustrate another modification of the dust collector. A base 45 provides a support for the housing 46. The housing 46 has an inlet passage 47 in communication with the inlet plenum zone immediately above the filtering zone which in turn is above the quiet zone similar to that shown in Figs. 1 and 2. A vertical compressed air reservoir 49 is clamped to the housing 46 by clamps 50 and 51. An outlet 52 provides egress for the clean air from the clean gas chamber through the clean gas outlet passage 53.

The valves 54 and 55 in conduits 154 and 155 control periodic reverse gas pulsing through each filter assembly 56. The sequencing of the valves may be controlled by a pressure responsive device sensing a differential pressure across the filter assembly or may be controlled electronically to periodically supply a reverse pulse of clean gas through the filters to clean the filters.

Fig. 6 illustrates a cross-section view taken on lines VI-VI of Fig. 4. The outlet passage 53 is in communication with the clean gas chamber 156. Conduit 57 forms orifices 58 and 59 which direct pulsed gas through the rectangular venturi 60 and 61, respectively. The conduit 57 is connected to the valve 62 which periodically reverse pulses a gas blast through the orifices from the reservoir 49. The tapered interior filter holder chamber 63 is in fluid communication through the venturi 60 with the clean gas chamber 156. The filter holder 64 is fastened to the partition 65 around each aperture therein by a suitable fastening means. A seal, not shown, is provided between partition 65 and filter holder 64 to form an airtight assembly with the partition 65. Each filter assembly 66 includes a filter 67 and 68 on opposing sides of the filter holder 64. Two banks of filter assemblies 66 are shown in section in Fig. 6 and both use common reverse pulse cleaning devices.

Referring to Fig. 7, an enlarged view of the reverse pulsing device is shown. Reservoir 49 supplies air to the conduits forming nozzles to supply a reverse gas pulse through the filters. A plurality of four conduits 70, 71, 72 and 73 are connected to supply a reverse pulse of gas to each of the filter assemblies 56 and 76. Fastening means 77 and 78 are shown for the filter assembly 76, while the fastening means 79 and 80 are shown for the filter assembly 56. The operation will be described in the following paragraphs.

The operation of all of the dust collectors shown is essentially the same and for convenience, reference will only be made to Fig. 2. The dirty gas flows into the inlet plenum zone 25 through the inlet passage 24. The dirty gas flows down into the filtering zone on the opposing sides of the filter banks 180 and 81. A dislodged particulate barrier wall 82 essentially separates the filtering zone 40 into separate chambers for each filter assembly. As the dirty gas flows downwardly, air filters through each filter assembly 35, 36, 37 and the gas stream imparts inertia forces to the particulates which combine with gravitational forces on particulates to cause some of the particulates to continue to move downwardly parallel with the filtering surfaces without depositing on the filter surfaces. A significant portion of the larger particulates will thus pass downwardly, as the gas is filtered through the filters, into the quiet zone 83, and deposit in hopper 39. The reverse pulsing of gas back through the filters will dislodge some of those particulates that do deposit on the filters back into the dirty gas stream to permit the gas stream to reimpart inertia forces to the particulates which again combine with gravitational forces to cause some of the dislodged particulates to pass through the filtering zone without redepositing on the filters. Therefore, the use of both inertia and gravitational forces minimize the amount of particulates that are collected on the filter surfaces.

Although Fig. 2 shows a horizontal compressed gas reservoir 42, it operates essentially the same as the vertical reservoir 49 shown in Figs. 3, 4, 5, 6 and 7. Periodically, pulses of compressed gas are reverse pulsed through the filter assemblies. The sequencing of the reverse pulsing is controlled by the valves 54 and 55 which pulse blasts of compressed gas through the venturi 60 and 61 and into the interior of the tapered filtered chambers in the filter assemblies. Since the filters are permeable to gas, the gas loosens the particulates. The particulates are pulsed outwardly into the downward gas stream and some will be carried downwardly into the hopper 39 forming the quiet zone 83. The quiet zone 83 allows the particulates to settle out of the gas stream where they can be periodically removed. The particulate barrier wall 82 essentially divides the dirty gas chamber into two compartment sand prevents the reverse gas pulses from causing particulates to pass horizontally from one filter bank to an adjacent filter bank and from depositing on the filters of the adjacent filter bank. The dust collector is designed primarily to carry the particulates downwardly parallel to the filtering surfaces into the quiet zone where they will be deposited. Although some particulates may deposit on the filtered surfaces, these are loosened by reverse clean gas pulses and caused to project into the downwardly flowing gas stream and then carried down into the quiet zone of the hopper 39.

**Claims**

1. A dust collector for removing particulates from a dirty gas stream comprising a housing (1; 46) having first and second ends and containing a partition (28A, 28B; 28; 65) dividing said housing into a vertically extending dirty gas chamber (5, 6; 27) having a dirty gas inlet (2; 23; 47) adjacent said first end of the housing and a clean gas chamber (13; 29; 156) having a clean gas outlet (15; 31; 53) adjacent said second end of the housing, said partition having apertures (32A, 33A; 32, 33) therethrough connecting said dirty gas chamber (5, 6; 27) in gas flow communication with said clean gas chamber (13; 29; 156), said dirty gas chamber including an inlet plenum zone (4; 25) in a top portion of said housing and having said dirty gas inlet (2; 23) therein, a quiet zone (11; 83; 48) at a bottom portion of said housing (1; 46), and a filtering zone (5A, 6A; 40) located between said plenum (4; 25) and quiet zones (11; 83; 48) having an assembly of filters (7, 8, 9, 10; 34, 35, 36, 37) operatively mounted therein and vertically arranged in banks to filter said dirty gas stream flowing through said apertures (32A, 33A; 32, 33), wherein said partition (28A, 28B; 28; 65) extends from said first end of the housing to said second end of the housing, wherein said filters (7, 8, 9, 10; 34, 35, 36, 37) have flat filter surfaces (67, 68) which are orientated vertically and extend through said filtering zone parallel to the downward flow of said dirty gas stream and the particulates entrained therein through said filter zone (5A, 6A; 40) toward said quiet zone (11; 83; 48), wherein said filter surfaces (67, 68) are oriented approximately perpendicularly to said partition (28A, 28B; 28; 65), wherein said quiet zone (11; 83; 48) is formed by a hopper which has an inlet opening which is at least coextensive with and in fluid communication with the bottom of the dirty gas chamber (5, 63; 27), the hopper inlet opening being below and in direct vertical alignment with said flat vertically oriented filter surfaces, and wherein a filter cleaning means (16, 17, 18, 19, 20; 42, 43, 44, 144; 57, 58, 59) is mounted in said clean gas chamber to dislodge some of those particulates that do deposit on said filter surfaces back into the dirty gas stream flowing downwardly parallel to the filter surfaces to permit said dirty gas stream to reimpart inertia forces to the dislodged particulates which combine with gravitational forces to cause some of the dislodged particulates to pass through said filtering zone and into said hopper without redepositing on said filter surfaces, characterised in that said filter surfaces of the banks are contiguous to one another in said filter zone from said plenum zone (4; 25) to said quiet zone (11, 83; 48) so that a continuous filter surface results to allow said dirty gas stream to flow substantially straight downwardly across said vertical filter surfaces with minimum turbulence to impart downwardly directed inertia forces to said particulates which combine with the gravitational forces on said particulates to maximize the amount of particulates that will pass directly through said filter zone (5A, 6A; 40) and into said quiet zone (11; 83; 48) without depositing on said filters (7, 8, 9, 10; 34, 35, 36, 37).

2. A dust collector according to claim 1, characterised in that said clean air chamber includes two horizontally spaced apart vertical partition walls (28A, 28B) mounted in said filtering zone of said housing and extending from said first end of the housing to the second end of the housing to divide said filtering zone into two horizontally spaced vertically extending filtering zones (5A, 6A) separated by said clean gas chamber (13); in that each of said partition walls has apertures (32A, 33A) therethrough; and in that a first filter assembly (7, 8) is mounted in each the first (5A) of said two filtering zones in dirty gas stream filtering relationship to the apertures (32A) in the associated partition wall (28A, 28B) and a second filter assembly (9, 10) is mounted in the second of the two filtering zones (6A) in dirty gas stream filtering relationship to the apertures in the associated partition wall (28B).

3. A dust collector according to claim 2, characterised in that said inlet plenum zone (4) is coextensive with and above both of said horizontally spaced filtering zones (5A, 6A); and in that said quiet zone (11) is coextensive with and below both of said horizontally spaced filtering zones (5A, 6A).

4. A dust collector according to claim 3, characterised in that said filter cleaning means includes a source (16) of selectably releasable, pressurized gas mounted in said plenum zone (4) above said clean air chamber (13); in that said source of pressurized gas has conduits (17, 18, 19, 20) extending downward into said clean air chamber; and in that said conduits are in fluid communication with said source (16) of pressurized gas and have openings therein registering with each of said apertures.

5. A dust collector according to any of the preceding claims, characterised in that said assembly of filters (7, 8, 9, 10; 34, 35, 36, 37) comprises a plurality of filter holders (64), each of said filter holders mounted on said partition (28A, 28B; 28; 65) in sealed surrounding relation to a respective one of said apertures (32A, 33A; 32, 33 to extend cantilever fashion into said filtering zone (5A, 6A; 40); in that said filter holders (64) are vertically contiguous to each other; and in that filters are mounted in said filter holders (64) to define a filter chamber around each of said apertures.

6. A dust collector according to claim 5, characterised in that each of said filter holders (64) is tapered in horizontal section, having a wide portion adjacent said partition (28A, 28B; 28; 65) and a narrow portion adjacent the cantilevered end to define a space in said filter zone (5A, 6A; 40) between said partition (28A, 28B; 28; 65) and said housing (1; 46), that progressively increases in volume as the distance from said partition increases.

7. A dust collector according to claim 5 or 6 wherein at least two horizontally spaced banks of filter holders are mounted in said filtering zone and characterised in that a wall (82) is mounted between each adjacent two banks of filter holders.

**Revendications**

1. Collecteur de poussière destiné à enlever des particules d'un courant de gaz pollué, comprenant un boîtier (1; 46) présentant une première et une seconde extrémités et contenant une cloison (28A; 28B; 28; 65) divisant ledit boîtier en une chambre pour gaz pollué (5, 6; 27) qui s'étend verticalement et possède une entrée de gaz pollué (2; 23; 47) au voisinage de ladite première extrémité du boîtier et en une chambre pour gaz propre (13; 29; 156) qui possède une sortie de gaz propre (15; 31; 53) au voisinage de ladite seconde extrémité du boîtier, ladite cloison étant traversée par des ouvertures (32A, 33A; 32, 33) qui relient ladite chambre pour gaz pollué (5, 6; 27) et ladite chambre pour gaz propre (13; 29; 156) en communication de courant de gaz, ladite chambre pour gaz pollué comprenant une zone de plénum d'entrée (4; 25) dans une partie supérieure dudit boîtier et dans laquelle est située ladite entrée de gaz pollué (2; 23), une zone de repos (11; 83; 48) dans une partie inférieure dudit boîtier (1; 46), et une zone de filtrage (5A, 6A; 40) qui est située entre lesdites zones de plénum (4; 25) et de repos (11; 83; 48) et dans laquelle est opérativement monté un ensemble de filtres (7, 8, 9, 10; 34, 35, 36, 37) agencés verticalement par rangées pour filtrer ledit courant de gaz pollué s'écoulant par lesdites ouvertures (32A, 33A; 32, 33), dans lequel ladite cloison (28A, 28B; 28; 65) s'étend depuis ladite première extrémité du boîtier jusqu'à ladite seconde extrémité du boîtier, dans lequel lesdits filtres (7, 8, 9, 10; 34, 35, 36, 37) ont des surfaces de filtre planes (67, 68) qui sont orientées verticalement et s'étendent à travers ladite zone de filtrage parallèlement à l'écoulement descendant dudit courant de gaz pollué et aux particules entraînées par celui-ci à travers ladite zone de filtrage (5A, 6A; 40) en direction de ladite zone de repos (11; 83; 48), dans lequel lesdites surfaces de filtre (67, 68) sont orientées approximativement perpendiculairement à ladite cloison (28A, 28B; 38; 65), dans lequel ladite zone de repos (11; 83; 48) est formée par une trémie qui possède une ouverture d'entrée qui a au moins la même taille que le fond de la chambre pour gaz pollué (5, 63; 27) et est en communication de fluide avec celui-ci, l'ouverture d'entrée de la trémie étant située au-dessous de et en alignement vertical direct avec lesdites surfaces de filtre planes et orientées verticalement, et dans lequel des moyens de nettoyage de filtre (16, 17, 18, 19, 20; 42, 43, 44, 144; 57, 58, 59) sont montés dans ladite chambre pour gaz propre pour déloger une partie desdites particules qui se déposent effectivement sur lesdites surfaces de filtre en retour dans le courant de gaz pollué qui s'écoule vers le bas parallèlement aux surfaces de filtre pour permettre audit courant de gaz pollué d'appliquer à nouveau des forces d'inertie aux particules délogées, qui se combinent avec les forces de gravité pour amener certaines des particules délogées à passer à travers ladite zone de filtrage et dans ladite trémie sans se déposer à nouveau sur lesdites surfaces de filtre, caractérisé en ce que lesdites surfaces de filtre des rangées sont contiguës les unes par rapport aux autres dans ladite zone de filtre depuis ladite zone de plénum (4; 25) jusqu'à ladite zone de repos (11, 83; 48) de sorte qu'il en résulte une surface de filtre continue pour permettre audit courant de gaz pollué de s'écouler sensiblement en ligne droite vers le bas le long desdites surfaces de filtre verticales avec un minimum de turbulences pour appliquer auxdites particules des forces d'inertie dirigées vers le bas qui se combinent aux forces de gravité afin de rendre maximale la quantité de particules qui passent directement à travers ladite zone de filtrage (5A, 6A; 40) et dans ladite zone de repos (11; 83; 48) sans se déposer sur lesdits filtres (7, 8, 9, 10; 34, 35, 36, 37).

**2.** Collecteur de poussière selon la revendication 1, caractérisé en ce que ladite chambre pour air propre comprend deux parois de cloison (28A, 28B) verticales et écartées horizontalement, montées dans ladite zone de filtrage dudit boîtier et s'étendant depuis ladite première extrémité du boîtier jusqu'à la seconde extrémité du boîtier pour diviser ladite zone de filtrage en deux zones de filtrage (5A, 6A) qui s'étendent verticalement, sont écartées horizontalement et sont séparées par ladite chambre pour gaz propre (13); en ce que chacune des deux parois de cloison est traversée par des ouvertures (32A, 33A); et en ce qu'un premier ensemble de filtres (7, 8) est monté dans chacune des première (SA) desdites deux zones de filtrage, en relation de filtrage du courant de gaz pollué vis-à-vis des ouvertures (32A) dans la paroi de cloison associée (28A, 28B), et un second ensemble de filtres (9, 10) est monté dans la seconde des zones de filtrage (6A) en relation de filtrage du courant de gaz pollué vis-à-vis des ouvertures dans la paroi de cloison associée (28B).

**3.** Collecteur de poussière selon la revendication 2, caractérisé en ce que ladite zone de plénum d'entrée (4) a la même taille que les deux zones de filtrage (5A, 6A) écartées horizontalement et est située au-dessus de celles-ci; et en ce que ladite zone de repos (11) a la même taille que les deux zones de filtrage (5A, 6A) écartées horizontalement et est située au-dessous de celles-ci.

**4.** Collecteur de poussière selon la revendication 3, caractérisé en ce que lesdits moyens de nettoyage de filtre comprennent une source (16) de gaz comprimé sélectivement déclenchable, montée dans ladite zone de plénum (4) au-dessus de ladite chambre à air propre (13); en ce que ladite source de gaz comprimé comporte des conduits (17, 18, 19, 20) qui s'étendent vers le bas dans ladite chambre à air propre; et en ce que lesdits conduits sont en communication de fluide avec ladite source (16) de gaz comprimé et présentent des lumières en correspondance avec chacune desdites ouvertures.

**5.** Collecteur de poussière selon l'une quelconque des revendications précédentes, caractérisé en ce que ledit ensemble de filtres (7, 8, 9, 10; 34, 35, 36, 37) comprend une pluralité de porte-filtres (64), chacun desdits porte-filtres étant monté sur ladite cloison (28A, 28B; 28; 65) en relation étanche autour d'une ouverture respective (32A, 33A; 32, 33) de manière à s'étendre en porte-à-faux vers l'intérieur de ladite zone de filtrage; en ce que lesdits porte-filtres (64) sont contigus verticalement les uns par rapport aux autres; et en ce que des filtres sont montés dans lesdits porte-filtre (64) pour définir une chambre de filtre autour de chacune desdites ouvertures.

**6.** Collecteur de poussière selon la revendication 5, caractérisé en ce que chacun desdits porte-filtres (64) a une section horizontale qui va en se rétrécissant, en ayant une partie large adjacente à ladite cloison (28A, 28B; 28; 65) et une partie étroite adjacente à l'extrémité en porte-à-faux pour définir un espace dans ladite zone de filtre (5A, 6A; 40) entre ladite cloison (28A, 28B; 28; 65) et ledit boîtier (1; 46), dont le volume augmente progressivement lorsque la distance depuis ladite cloison augmente.

**7.** Collecteur de poussière selon l'une ou l'autre des revendications 5 et 6, dans lequel au moins deux rangées écartées horizontalement de porte-filtres sont montées dans ladite zone de filtrage et caractérisé en ce qu'une paroi (82) est montée entre chaque paire de rangées adjacentes de porte-filtres.

**Patentansprüche**

**1.** Staubsammler zum Entfernen von Teilchen aus einem Schmutzgasstrom, welcher umfaßt ein Gehäuse (1; 46) mit ersten und zweiten Enden, das eine Teilwand (28A, 28B; 28; 65) enthält, die das Gehäuse in eine sich vertikal erstreckende Schmutzgaskammer (5, 6; 27) mit einem Schmutzgas-Einlaß (2; 23; 47) benachbart zum ersten Ende des Gehäuses und eine Reingaskammer (13; 29; 156) mit einem Reingas-Auslaß (15; 31; 53) benachbart zum zweiten Ende des Gehäuses unterteilt, wobei die Teilwand Durchbrüche (32A, 33A; 32, 33) besitzt, welche die Schmutzgaskammer (5, 6; 27) in Gasströmungsbeziehung mit der Reingaskammer (13; 29; 156) verbinden, die Schmutzgaskammer enthält eine Einlaß-Sammelzone (4; 25) in einem oberen Abschnitt des Gehäuses, in der sich der Schmutzgas-Einlaß (2; 23) befindet, eine Ruhezone (11; 83; 48) in einem Bodenabschnitt des Gehäuses (1; 46) und eine zwischen der Sammelzone (4; 25) und der Ruhezone (11; 83; 48) gelegene Filterzone (5A, 6A; 40) mit einer wirksam darin angebrachten und vertikal in Reihen angeordneten Anordnung von Filtern (7, 8, 9, 10; 34, 35, 36, 37) zum Filtern des durch die Durchbrüche (32A, 33A; 32, 33) fließenden Schmutzgasstroms, worin die Teilwand (28A, 28B; 28, 65) sich vom ersten Ende des Gehäuses zu dem zweiten Ende des Gehäuses erstreckt, worin die Filter (7, 8, 9, 10; 34, 35, 36, 37) ebene Filterflächen (67, 68) besitzen, die vertikal ausgerichtet sind und sich durch die Filterzone parallel zu der abwärts gerichteten Strömung des Schmutzgasstroms und der darin durch die Filterzone (5A, 6A; 40) zu der Ruhezone (11; 83; 48) mitgerissenen Teilchen erstrecken, worin die Filterflächen (67, 68) annähernd senkrecht zu der Teilwand (28A, 28B; 28; 65) ausgerichtet sind, worin die Ruhezone (11; 83; 48) durch einen Trichter gebildet ist mit einer Einlaßöffnung, die mindestens gleiche Ausdehnung aufweist wie der Boden der Schmutzgaskammer (5, 63; 27) und in Fluidverbindung mit diesem ist, wobei die Trichtereinlaßöffnung unter und in direkter Vertikalausrichtung mit den ebenen vertikal ausgerichteten Filterflächen ist und worin ein Filterreinigungsmittel (16, 17, 18, 19, 20; 42, 43, 44, 144; 57, 58, 59) in der Reingaskammer angebracht ist, um einige der sich an den Filterflächen abscheidenden Teilchen zurück in die nach unten parallel zu den Filterflächen fließenden Schmutzgasströmung zu versetzen, um es der Schmutzgasströmung zu ermöglichen, den versetzten Teilchen wieder Trägheitskräfte zu erteilen, die sich mit Schwerkräften verbinden, um einige der versetzten Teilchen durch die Filterzone und in den Trichter hindurchtreten zu lassen, ohne sich wieder an den Filterflächen abzuscheiden, dadurch gekennzeichnet, daß die Filterflächen der Reihen in der Filterzone von der Sammelzone (4; 25) zu der Ruhezone (11, 83; 48) aneinander anstoßend sind, so daß sich eine kontinuierliche Filterfläche ergibt, um die Schmutzgasströmung im wesentlichen geradlinig mit minimaler Turbulenz nach unten über die vertikalen Filterflächen strömen zu lassen, um den Teilchen nach unten gerichtete Trägheitskräfte zu erteilen, die sich mit den Schwerkräften auf die Teilchen verbinden, um die Menge von Teilchen möglichst groß zu machen, welche direkt durch die Filterzone (5A, 6A; 40) und in die Ruhezone (11; 83; 48) hindurchtreten, ohne sich an den Filtern (7, 8, 9, 10; 34, 35, 36, 37) abzulagern.

2. Staubsammler nach Anspruch 1, dadurch gekennzeichnet, daß die Reinluftkammer zwei horizontal mit Abstand voneinander vorgesehene vertikale Teilwände (28A, 28B) enthält, die in der Filterzone des Gehäuses angebracht sind und sich von dem ersten Ende des Gehäuses zu dem zweiten Ende des Gehäuses erstrekken, um die Filterzone in zwei horizontal beabstandete, sich vertikal erstreckende Filterzonen (5A, 6A) aufzuteilen, die durch die Reingaskammer (13) getrennt sind; daß jede Teilwand Durchbrüche (32A, 33A) enthält; und daß eine erste Filteranordnung (7, 8) in jeder ersten (5A) der beiden Filterzonen in Schmutzgasströmungs-Filterbeziehung zu den Durchbrüchen (32A) in der zugeordneten Teilwand (28A, 28B) angebracht ist und eine zweite Filteranordnung (9, 10) in der zweiten der beiden Filterzonen (6A) in Schmutzgasströmungs-Filterbeziehung zu den Durchbrüchen in der zugeordneten Teilwand (28B) angebracht ist.

3. Staubsammler nach Anspruch 2, dadurch gekennzeichnet, daß die Einlaß-Sammelzone (4) gleicherstreckend mit und über den beiden horizontal beabstandeten Filterzonen (5A, 6A) ausgebildet ist; und daß die Ruhezone (11) gleicherstreckend mit und unter den beiden horizontal beabstandeten Filterzonen (5A, 6A) ausgebildet ist.

4. Staubsammler nach Anspruch 3, dadurch gekennzeichnet, daß das Filterreinigungsmittel eine Quelle (16) für wahlweise auslösbares Druckgas enthält, die in der Sammelzone (4) über der Reinluftkammer (13) angebracht ist; daß die Druckgasquelle Leitungen (17, 18, 19, 20) besitzt, die sich nach unten in die Reinluftkammer erstrecken; und daß die Leitungen in Fluidverbindung mit der Druckgasquelle (16) sind und Öffnungen in sich besitzen, die mit jedem Durchbruch ausgerichtet sind.

5. Staubsammler nach einem der vorangehenden Ansprüche, dadurch gekennzeichnet, daß die Anordnung von Filtern (7, 8, 9, 10; 34, 35, 36, 37) eine Vielzahl von Filterhaltern (64) umfaßt, von denen jeder Filterhalter an der Teilwand (28A, 28B; 28; 65) in abgedichteter Umfassungsbeziehung zu einem jeweiligen Durchbruch (32A, 33A; 32, 33) angebracht ist, um sich vorkragend in die Filterzone (5A, 6A; 40) zu erstrecken; daß die Filterhalter (64) vertikal aneinanderstoßend ausgebildet sind und daß die Filter in den Filterhaltern (64) zur Bestimmung einer Filterkammer um jeden Durchbruch angebracht isnd.

6. Staubsammler nach Anspruch 5, dadurch gekennzeichnet, daß jeder Filterhalter (64) sich im Horizontalschnitt verjüngt, mit einem breiten Abschnitt benachbart der Teilwand (28A, 28B; 28; 65) und einem schmalen Abschnitt benachbart dem vorkragenden Ende, um so in der Filterzone (5A, 6A; 40) zwischen der Teilwand (28A, 28B; 28; 65) und dem Gehäuse (1; 46) einen Raum zu bestimmen, der mit zunehmendem Abstand von der Teilwand fortschreitend an Volumen zunimmt.

7. Staubsammler nach Anspruch 5 oder 6, bei dem mindestens zwei horizontal beabstandete Reihen von Filterhaltern in der Filterzone angebracht sind und dadurch gekennzeichnet, daß eine Wand (82) zwischen jeweils zwei benachbarten Reihen von Filterhaltern angebracht ist.

FIG. 1

FIG. 2

FIG. 3

FIG. 4

FIG. 5

EP 0 172 538 B1

FIG. 6

FIG. 7